# EUROPÄISCHE PATENTSCHRIFT

(11) **EP 0 818 067 B1**
(45) Veröffentlichungstag und Bekanntmachung des Hinweises auf die Patenterteilung: **02.06.1999**
(21) Anmeldenummer: 96905849.4
(22) Anmeldetag: 01.03.1996
(51) Int. Cl.: H01R 25/16, H02G 5/08, H02G 3/12

(54) **GERÄTEADAPTER FÜR STROMSAMMELSCHIENEN EINES SAMMELSCHIENENSYSTEMS**
DEVICE ADAPTER FOR BUSBAR IN A BUSBAR SYSTEM
ADAPTATEUR D'APPAREILS POUR BARRES OMNIBUS DANS UN SYSTEME DE BARRES OMNIBUS

(30) Priorität: 28.03.1995 DE 19511284
(43) Veröffentlichungstag der Anmeldung: 14.01.1998
(73) Patentinhaber: Rittal-Werk Rudolf Loh GmbH & Co. KG, 35745 Herborn (DE)
(72) Erfinder: BIERMEIER, Eberhard, D-35606 Solms (DE); OUSMANE, Mouhamadou, D-35039 Marburg (DE); WAGENER, Hans, D-35716 Dietzhölztal (DE)
(74) Vertreter: Fleck, Hermann-Josef, Dr.-Ing.
(86) Internationale Anmeldenummer: EP9600873
(87) Internationale Veröffentlichungsnummer: WO9630973

(56) Entgegenhaltungen:
- EP-A- 0 106 535
- EP-A- 0 292 380
- US-A- 2 124 269

## Beschreibung

Die Erfindung betrifft einen Geräteadapter zum steckbaren Anschließen an Stromsammelschienen eines Sammelschienensystems mit in einem länglichen Adaptergehäuse untergebrachten Anschlußkontakten, das Rastverbindungen zum Halten an einem Befestigungsunterteil des Sammelschienensystems und einen Abschnitt einer Hutschiene zum Aufbringen eines Gerätes trägt.

Ein Sammelschienensystem dieser Art ist durch die DE 38 11 456 C2 bekannt. Dabei lassen sich die mit Anschlußkontakten versehenen Geräte auf die Klemmschenkel der Stromsammelschienen aufstecken. Die Geräte verrasten mechanisch mit dem Befestigungsunterteil, so daß auch die elektrischen Verbindungen zwischen den Geräten und den Stromsammelschienen aufrechterhalten werden. Der Nachteil dieser Anschlußtechnik ist der komplizierte Aufbau eines Geräteadapters, auf welchem Geräte aufgebaut und angeschlossen werden können.

Es ist Aufgabe der Erfindung, einen Geräteadapter der eingangs erwähnten Art zu schaffen, der mit einfachen Teilen schnell aufgebaut und sicher mit dem bekannten Sammelschienensystem verbunden werden kann und darüber hinaus den Aufbau und Anschluß von aufzubringenden Geräten erleichtert.

Diese Aufgabe wird nach der Erfindung dadurch gelöst, daß das Adaptergehäuse in seiner Längsrichtung und parallel zur Aufsteckrichtung in zwei Gehäusehälften unterteilt ist, daß die Gehäusehälften auf den einander zugekehrten Seiten in der Trennebene in Längsrichtung verteilt, jedoch quer dazu stufig versetzt Halteelemente zur unverdrehbaren Festlegung von den steckbaren Anschluß ermöglichenden U-förmigen Flachsteckkontakten tragen, daß die Gehäusehälften miteinander verbunden sind und daß die Flachsteckkontakte über Leitungen mit in einem Kontaktblock untergebrachten Anschlußklemmen verbunden sind oder direkt mit dem aufzusetzenden Gerät verbindbar sind.

Durch diese Art Trennung des Adaptergehäuses in zwei Gehäusehälften werden in richtiger Zuordnung zu den Stromsammelschienen die Flachsteckkontakte festgelegt, die einfach vor dem Verbinden der Gehäusehälften eingelegt und unverdrehbar im Bereich der stufig abgesetzten Trennebene gehalten sind.

Dazu sind die Gehäusehälften vorzugsweise so ausgelegt, daß die Gehäusehälften im wesentlichen Seitenwände des Adaptergehäuses bilden und mit in Längsrichtung stufig abgesetzten, sich ergänzenden senkrecht zu den Seitenwänden angeordneten Trennwänden versehen sind, und daß im Bereich der Stoßstelle der Trennwände Halteelemente zur unverdrehbaren Aufnahme der Flachsteckkontakte angeformt sind.

Nach einer besonders vorteilhaften Ausgestaltung ist vorgesehen, daß die Flachsteckkontakte durch einen Schlitz in zwei Kontaktschenkel unterteilt sind, deren Abstand etwas kleiner ist als die Dicke von Klemmschenkeln üblicher Stromsammelschienen, daß die Schlitze der Flachsteckkontakte in einem runden Endabschnitt enden, durch den die als Schraubaufnahmen ausgebildete Halteelemente geführt sind, und daß über diese Schraubaufnahmen die beiden Gehäusehälften miteinander verbunden sind. Dabei werden die Halteelemente gleichzeitig auch zur Verbindung der beiden Gehäusehälften ausgenützt. Teile der Gehäusehälften können die Flachsteckkontakte außerhalb der Kontaktschenkel auch teilweise umschließen und so zur unverdrehbaren Festlegung derselben beitragen.

Eine weitere Vereinfachung ergibt sich dadurch, daß die Leitungen vorzugsweise angenietet oder angeschweißt sind.

Die mechanische Verbindung zwischen dem Geräteadapter und dem Befestigungsunterteil des Sammelschienensystems wird nach einer Ausgestaltung dadurch gelöst, daß die Gehäusehälften mit Wandteilen versehen sind, welche die quer zur Längsrichtung verlaufenden schmalen Seiten des Adaptergehäuses bilden und mit Raststegen versehen sind.

Ist nach einer Ausgestaltung vorgesehen, daß die Gehäusehälften im oberen Bereich ihrer langen Seitenwände mit Lochleisten mit Löchern gleichmäßiger Teilung versehen sind, dann können auf dem Adaptergehäuse Geräte oder andere Aufbauten in verschiedenen Positionen aufgebaut werden.

Der Zugang zu den Flachsteckkontakten mit ihren Leitungen wird dadurch erleichtert, daß die offene Oberseite der miteinander verbundenen Gehäusehälften mittels eines als Schieber einführbaren Deckels verschließbar ist und daß dieser Deckel mit Reihen von Bohrungen zum Anbringen des Abschnittes einer Hutschiene versehen ist. Der Deckel wird zudem zum Anbringen des Abschnittes einer Hutschiene verwendet, auf die mit entsprechender Hutaufnahme versehene Geräte aufgeklipst werden können. Auch diese Hutschiene kann in verschiedenen Positionen auf dem Deckel befestigt werden.

Zur Veränderung der Position des auf dem Deckel sitzenden Geräts kann eine Ausgestaltung verwendet werden, die dadurch gekennzeichnet ist, daß der Deckel zwischen den Lochleisten und einem Führungssteg der miteinander verbundenen Gehäusehälften einführbar ist, daß die Lochleisten den Führungsstegen zugekehrt eine Reihe von Rastaufnahmen für am Deckel festgelegte Rastfedern bilden und daß der Deckel mittels einer Haltefeder in der eingeschobenen Endstellung gehalten ist.

Ist nach einer Ausgestaltung vorgesehen, daß die Anschlußklemmen für die von den Flachsteckkontakten kommenden Leitungen in einem Kontaktblock untergebracht sind, der mit den miteinander verbundenen Gehäusehälften mittels Rastverbindungen verbindbar ist, dann kann der Kontaktblock auch nur bei Bedarf am Adaptergehäuse angebracht werden, wenn die von den Flachsteckkontakten kommenden Leitungen direkt am Gerät angeschlossen werden können.

Die Verbindung zwischen dem Kontaktblock und dem Adaptergehäuse ist dabei so gelöst, daß der Kontaktblock mit Rastfedern versehen ist, die auf den einander zugekehrten Innenseiten der langen Seitenwände der Gehäusehälften geführt sind und mit Raststegen in Ausnehmungen dieser Seitenwände einrasten.

Ist vorgesehen, daß der Kontaktblock mittels eines Kontaktblock-Deckels verschließbar ist, der am Kontaktblock mittels Rastverbindungen gehalten ist und daß der Kontaktblock-Deckel zusätzliche Rastelemente zum Befestigen an dem Befestigungsunterteil aufweist, dann sind die elektrischen Anschlüsse berührungssicher abgedeckt. Der Kontaktblock-Deckel wird dabei zur Festlegung des Geräteadapters an dem Befestigungsunterteil des Sammelschienensystems mitverwendet.

Die Erfindung wird anhand eines in den Zeichnungen dargestellten Ausführungsbeispiels näher erläutert. Es zeigen:
Fig. 1 in perspektivischer Ansicht den Aufbau des Sammelschienensystems,
Fig. 2 in Explosionsdarstellung die Teile zum Aufbau eines Geräteadapters,
Fig. 3 in Draufsicht den Geräteadapter bei abgenommenem Deckel und
Fig. 4 in Seitenansicht den Geräteadapter bei abgenommener Gehäusehälfte, auf die stufig abgesetzte Trennebene gesehen.

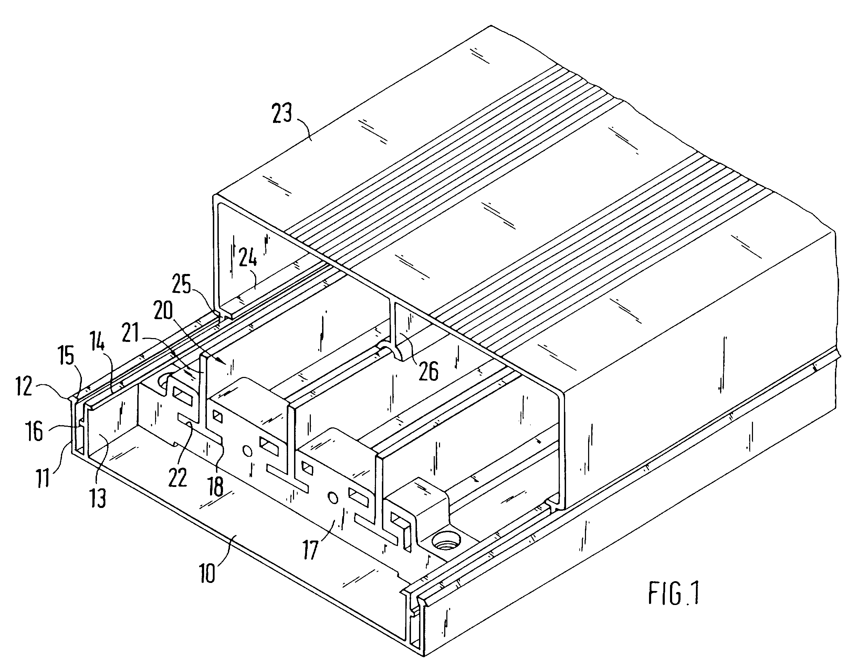

Das Sammelschienensystem nach Fig. 1 ist dreipolig ausgelegt. In einem wannenartigen Befestigungsunterteil 10 sind drei Stromsammelschienen 20 untergebracht. Die Seitenwände des Befestigungsunterteils 10 sind doppelwandig ausgebildet, wie die Wände 11 und 13 zeigen. Dabei sind an der Wand 11 ein nach außen gerichteter Raststeg 12 und ein nach innen gerichteter Raststeg 15 angeformt. An der Wand 13 ist auf der der Wand 11 zugekehrten Seite ein Anschlagsteg 16 angeformt, während die nach innen gerichtete Seite der Wand 13 einen Raststeg 14 trägt. Das Befestigungsunterteil 10 nimmt Halter 17 mit T-förmigen Aufnahmen 18 auf, die durch die Raststege 14 der Wände 13 gehalten sind. Die Stromsammelschienen 20 sind in die Aufnahmen 18 der Halter 17 eingeschoben und durch ihre Halteschenkel 22 so gehalten, daß die Klemmschenkel 21 senkrecht zur Befestigungsfläche, d.h. Unterseite, des Befestigungsteils 10 stehen. Die Stromsammelschienen 20 werden in den nicht durch Anschlußadapter, Einspeiseadapter oder Geräteadapter belegten Stellen mittels einer Abdeckung 23 abgedeckt, deren Seitenwände in nach innen gerichtete Stege 24 auslaufen. Diese Stege 24 liegen auf den Wänden 11 und 13 des Befestigungsunterteils 10 auf und tragen Raststege 25, die zwischen die Wände 11 und 12 bis zum Anschlag am Anschlagsteg 16 eingeführt werden und mit dem Raststeg 15 der Wand 11 verrasten. Die Abdeckung 23 kann sich über Stützstege 26 auf den Klemmschenkeln 21 der Stromsammelschienen 20 zusätzlich abstützen.

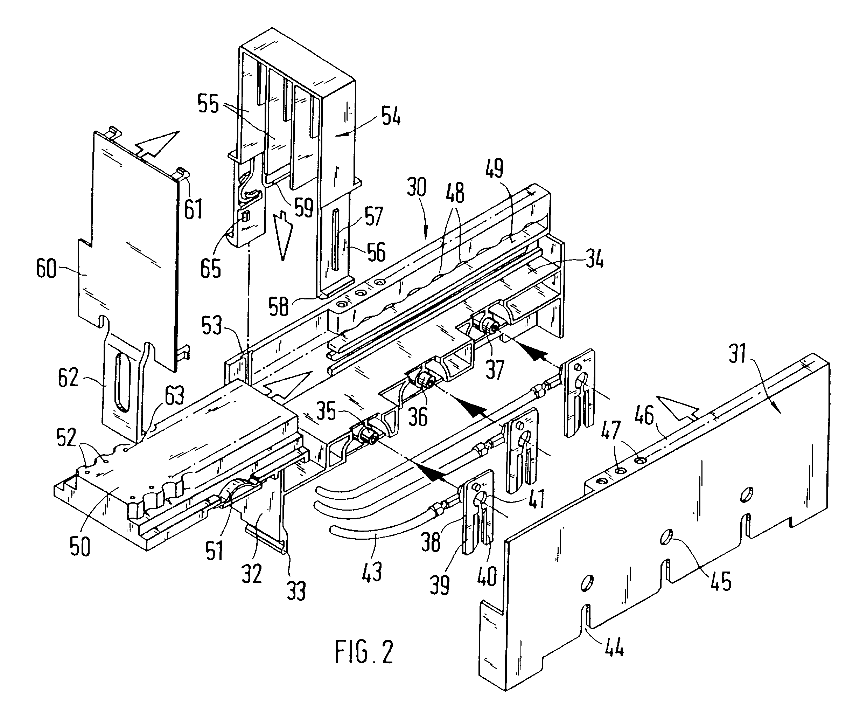

Der Aufbau eines Geräteadapters für das Sammelschienensystem nach Fig. 1 wird anhand der Fig. 2 erläutert. Das Adaptergehäuse wird aus den Gehäusehälften 30 und 31 zusammengesetzt. Die beiden Gehäusehälften 30 und 31 bilden im wesentlichen die quer zu den Stromsammelschienen stehenden Seitenwände des Adaptergehäuses, wie die beabstandeten Schlitze 44 erkennen lassen. An den einander zugekehrten Innenseiten der Gehäusehälften 30 und 31 sind horizontale Teilwände 34 angeformt, die stufig abgesetzt sind, sich aber ergänzen. Im Bereich dieser Trennwände 34 sind Halteaufnahmen mit Halteelementen 35, 36 und 37 angeformt, die als Schraubaufnahmen ausgebildet sind. Auf diese Halteelemente 35, 36 und 37 werden U-förmige Flachsteckkontakte 38 aufgesteckt, die damit unverdrehbar in den Halteaufnahmen gehalten sind. Die Halteaufnahmen sind den Schlitzen 44 für die Stromsammelschienen so zugeordnet, daß die mit Schlitzen in zwei Kontaktschenkel 39 und 40 unterteilten Flachsteckkontakte 38 auf die Stromsammelschienen 20 des Sammelschienensystems nach Fig. 1 aufgesteckt werden, wenn der Geräteadapter mit diesem verbunden wird. Die Halteaufnahmen werden durch Teile der Teilwände 34 gebildet. Die Schlitze der Flachsteckkontakte 38 gehen in runde Endabschnitte 41 über, durch die die Halteelemente 35, 36 und 37 geführt sind. Mittels Schrauben, die in die Schraubaufnahmen 45 der Gehäusehälfte 31 eingeführt und in die als Schraubaufnahmen ausgebildeten Halteelemente 35, 36 und 37 eingeschraubt werden, werden die beiden Gehäusehälften 30 und 31 unter Festlegung der Flachsteckkontakte 38 miteinander verbunden. Der Versatz der Halteaufnahmen an den Teilwänden 34 in Längsrichtung der Stromsammelschienen vergrößert den Abstand der Kontaktstellen und richtet sich auch nach den Abmessungen der mit dem Geräteadapter zu verbindenden Geräte.

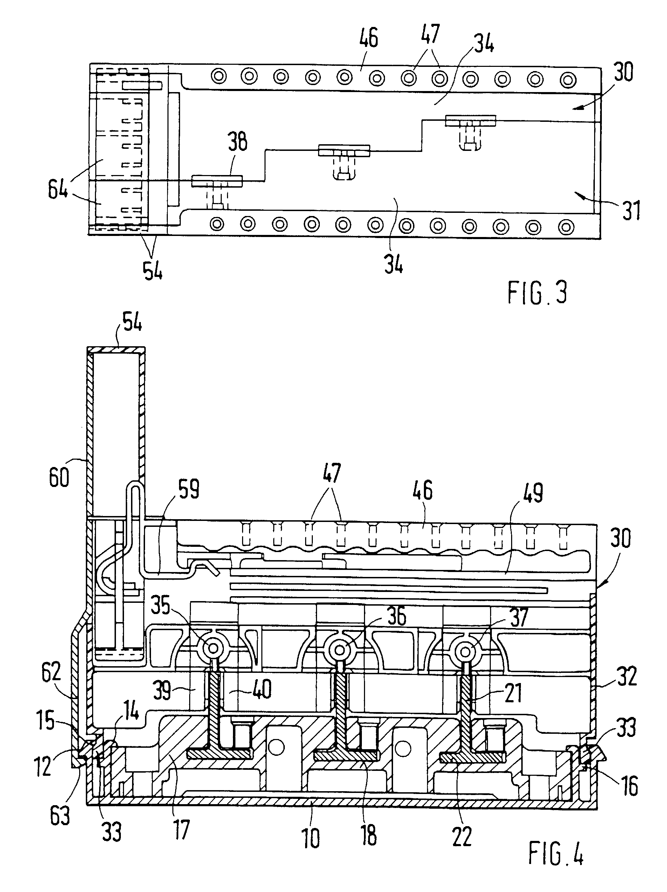

Wie Fig. 3 zeigt, ergänzen sich die horizontalen Teilwände 34 und legen die Flachsteckkontakte 38 in dem zusammengesetzten Adaptergehäuse fest.

Im oberem Bereich der Seitenwände der Gehäusehälften 30 und 31 sind Lochleisten 46 mit einer Reihe von Löchern 47 angeformt, so daß Geräte oder sonstige Aufbauten direkt an den Gehäusehälften 30 und 31 in verschiedenen Positionen befestigt werden können. Die Gehäusehälften 30 und 31 tragen zudem Wandteile 32, die die parallel zu den Stromsammelschienen stehenden Seiten des Adaptergehäuses bilden und verschließen. Diese Wandteile 32 laufen in Raststege 33 auf, die zwischen die Wände 11 und 13 des Befestigungsteils 10 eingeführt werden und mit dem Raststeg 15 der Wand 11 verrasten, wie Fig. 4 zeigt.

Unterhalb der Lochleisten 46 der Gehäusehälften 30 und 31 sind Führungsstege 49 angeformt, so daß ein als Schieber ausgebildeter Deckel 50 eingeschoben und die Oberseite des Adaptergehäuses verschlossen werden kann. Die den Führungsstegen 49 zugekehrten Seiten der Lochleisten 46 tragen eine Reihe von Rastaufnahmen 48 für Rastfedern 51, die an dem Deckel 50 festgelegt sind. Der Deckel 50 kann in verschiedene Positionen eingestellt werden und trägt Reihen von Bohrungen 52, so daß ein Abschnitt einer Hutschiene in verschiedenen Positionen auf dem Deckel 50 befestigt werden kann. Auf diese Hutschiene wird in bekannter Weise ein mit Hutaufnahme und Rastschieber versehenes Gerät aufgeklipst.

Die Leitungen 43 der Flachsteckkontakte 38 führen zu Anschlußklemmen 64 in einem Kontaktblock 54, der in Kammern 55 unterteilt ist. An dem Kontaktblock 54 sind zwei Rastfedern 56 angeformt, die in Raststege 58 auslaufen. Die Rastfedern 56 werden im Anschluß an die horizontalen Teilwände 34 zwischen die quer zu den Stromsammelschienen stehenden Seitenwände eingeschoben, wobei Stege 56 der Rastfedern 56 in Nuten 53 der Seitenwände geführt sind. Die Raststege 58 rasten in Aussparungen der Seitenwände des Adaptergehäuses ein und legen den Kontaktblock 54 am Adaptergehäuse fest. An den Rastfedern 56 ist eine Rastfeder 59 eingehängt, die bei voll eingeschobenem Deckel 50 hinter diesen einrastet und die Endstellung desselben festlegt.

Der Kontaktblock 54 wird mittels eines Kontaktblock-Deckels 60 verschlossen, der mit dem Kontaktblock 54 verrastet wird, wie die Rastelemente 61 und 65 erkennen lassen. An dem Kontaktblock-Deckel 60 ist eine Rastfeder 62 angeformt, die in einen Raststeg 63 ausläuft. Wie Fig. 4 zeigt, rastet dieser Raststeg 63 hinter den äußeren Raststeg 12 der Wand 11 des Befestigungsteils 10. Über den Durchbruch in der Rastfeder 62 kann die Rastverbindung der Rastfeder 59 aufgehoben werden, so daß der Deckel 50 vom Adaptergehäuse gelöst werden kann.

## Patentansprüche

1. Geräteadapter zum steckbaren Anschließen an Stromsammelschienen (20) eines Sammelschienensystems mit in einem länglichen Adaptergehäuse untergebrachten Anschlußkontakten, das Rastverbindungen zum Halten an einem Befestigungsuntertel (10) des Sammelschienensystems und einen Abschnitt einer Hutschiene zum Aufbringen eines Gerätes trägt,
dadurch gekennzeichnet,
daß das Adaptergehäuse in seiner Längsrichtung und parallel zur Aufsteckrichtung in zwei Gehäusehälften (30, 31) unterteilt ist,
daß die Gehäusehälften (30, 31) auf den einander zugekehrten Seiten in der Trennebene in Längsrichtung verteilt, jedoch quer dazu stufig versetzt Halteelemente (35,36, 37,42) zur unverdrehbaren Festlegung von den steckbaren Anschluß ermöglichenden U-förmigen Flachsteckkontakten (38) tragen,
daß die Gehäusehälften (30, 31) miteinander verbunden sind und
daß die Flachsteckkontakte (38) über Leitungen (43) mit in einem Kontaktblock (54) untergebrachten Anschlußklemmen (64) verbunden sind oder direkt mit dem aufzusetzenden Gerät verbindbar sind.

2. Geräteadapter nach Anspruch 1,
dadurch gekennzeichnet,
daß die Gehäusehälften (30,31) im wesentlichen Seitenwände des Adaptergehäuses bilden und mit in der Längsrichtung stufig abgesetzten, sich ergänzenden, senkrecht zu den Seitenwänden angeordneten Trennwänden (34) versehen sind, und
daß im Bereich der Stoßstelle der Trennwände (34) Halteelemente (35, 36, 37) zur unverdrehbaren Aufnahme der Flachsteckkontakte (38) angeformt sind.

3. Geräteadapter nach Anspruch 2,
dadurch gekennzeichnet,
daß die Flachsteckkontakte (38) durch einen Schlitz in zwei Kontaktschenkel (39, 40) unterteilt sind, deren Abstand etwas kleiner ist als die Dicke von Klemmschenkeln üblicher Stromsammelschienen,
daß die Schlitze der Flachsteckkontakte (38) in einem runden Endabschnitt (41) enden, durch den die als Schraubaufnahmen ausgebildete Halteelemente (35,36, 37) geführt sind, und
daß über diese Schraubaufnahmen die beiden Gehäusehälften (30, 31) miteinander verbunden sind.

4. Geräteadapter nach einem der Ansprüche 1 bis 3,
dadurch gekennzeichnet,
daß die Leitung (43) vorzugsweise angenietet oder angeschweißt ist.

5. Geräteadapter nach einem der Ansprüche 1 bis 4,
dadurch gekennzeichnet,
daß die Gehäusehälften (30, 31) mit Wandteilen (32) versehen sind, welche die quer zur Längsrichtung verlaufenden schmalen Seiten des Adaptergehäuses bilden und mit Raststegen (33) versehen sind.

6. Geräteadapter nach einem der Ansprüche 1 bis 5,
dadurch gekennzeichnet,
daß die Gehäusehälften (30, 31) im oberen Bereich ihrer langen Seitenwände mit Lochleisten (46) mit Löchern (47) in gleichmäßiger Teilung versehen sind.

7. Geräteadapter nach einem der Ansprüche 1 bis 6,
dadurch gekennzeichnet,
daß die offene Oberseite der miteinander verbundenen Gehäusehälften (30, 31) mittels eines als Schieber einführbaren Deckels (50) verschließbar ist und
daß dieser Deckel (50) mit Reihen von Bohrungen (52) zum Anbringen des Abschnittes einer Hutschiene versehen ist.

8. Geräteadapter nach Anspruch 6 oder 7,
dadurch gekennzeichnet,
daß der Deckel (50) zwischen den Lochleisten (46) und einem Führungssteg (49) der miteinander verbundenen Gehäusehälften (30, 31) einführbar ist,
daß die Lochleisten (46) den Führungsstegen (49) zugekehrt eine Reihe von Rastaufnahmen (48) für am Deckel (50) festgelegte Rastfedern (51) bilden und
daß der Deckel (50) mittels einer Haltefeder (59) in der eingeschobenen Endstellung gehalten ist.

9. Geräteadapter nach einem der Ansprüche 1 bis 8,
dadurch gekennzeichnet,
daß die Anschlußklemmen (64) für die von den Flachsteckkontakten (38) kommenden Leitungen (43) in einem Kontaktblock (54) untergebracht sind, der mit den miteinander verbundenen Gehäusehälften (30, 31) mittels Rastverbindungen verbindbar ist.

10. Geräteadapter nach Anspruch 9,
dadurch gekennzeichnet,
daß der Kontaktblock (54) mit Rastfedern (56) versehen ist, die auf den einander zugekehrten Innenseiten der langen Seitenwänden der Gehäusehälften (30, 31) geführt sind und mit Raststegen (58) in Ausnehmungen dieser Seitenwände einrasten.

11. Geräteadapter nach Anspruch 9 oder 10,
dadurch gekennzeichnet,
daß der Kontaktblock (54) mittels eines Kontaktblock-Deckels (60) verschließbar ist, der am Kontaktblock (54) mittels Rastverbindungen gehalten ist und
daß der Kontaktblock-Deckel (60) zusätzliche Rastelemente zum Befestigen an dem Befestigungsunterteil (10) aufweist.

## Claims

1. Apparatus adapter for the plug-in connection to bus bars (20) of a bus bar system, having connection contacts accommodated in an elongate adapter housing, which housing carries locking connections for retention on a lower mounting part (10) of the bus bar system and a portion of a cap-like rail for the mounting of an apparatus, characterised in that the adapter housing is divided into two housing halves (30, 31) in its longitudinal direction and parallel to the plug-in direction; in that the housing halves (30, 31) carry retaining elements (35,36, 37,42) for the non-pivotable securement of U-shaped flat plug contacts (38), which permit the plug-in connection, said retaining elements being distributed on the sides facing one another in the parting plane when viewed with respect to the longitudinal direction, but being offset in a stepped manner transversely relative thereto; in that the housing halves (30, 31) are interconnected; and in that the flat plug contacts (38) are connected to connecting terminals (64), which are accommodated in a contact block (54), via leads (43) or are directly connectable to the apparatus to be attached.

2. Apparatus adapter according to claim 1, characterised in that the housing halves (30, 31) substantially form side walls of the adapter housing and are provided with supplementary dividing walls (34), which reduce incrementally when viewed with respect to the longitudinal direction and are disposed perpendicularly relative to the side walls; and in that retaining elements (35, 36, 37) are provided in the junction region of the dividing walls (34) for the non-pivotable accommodation of the flat plug contacts (38).

3. Apparatus according to claim 2, characterised in that the flat plug contacts (38) are divided by a slot into two contact portions (39, 40), the spacing between said portions being somewhat smaller than the thickness of clamping portions of conventional bus bars; in that the slots in the flat plug contacts (38) terminate in a round end portion (41), through which the retaining elements (35, 36, 37), configured as screw receivers, are guided; and in that the two housing halves (30, 31) are interconnected via these screw receivers.

4. Apparatus adapter according to one of claims 1 to 3, characterised in that the lead (43) is preferably riveted or welded.

5. Apparatus adapter according to one of claims 1 to 4, characterised in that the housing halves (30, 31) are provided with wall parts (32), which form the narrow sides of the adapter housing extending transversely relative to the longitudinal direction and are provided with locking ribs (33).

6. Apparatus adapter according to one of claims 1 to 5, characterised in that the housing halves (30, 31) are provided, in the upper region of their long side walls, with perforated strips (46) having uniformly spaced-apart holes (47).

7. Apparatus adapter according to one of claims 1 to 6, characterised in that the open upper side of the interconnected housing halves (30, 31) is closable by means of a cover (50), which is insertable as a slider; and in that this cover (50) is provided with rows of bores (52) for the mounting of the portion of a cap rail.

8. Apparatus adapter according to claim 6 or 7, characterised in that the cover (50) is insertable between the perforated strips (46) and a guide rib (49) of the interconnected housing halves (30, 31); in that, when facing the guide ribs (49), the perforated strips (46) form a row of locking receivers (48) for locking springs (51) secured on the cover (50); and in that the cover (50) is retained in the inserted end position by means of a retaining spring (59).

9. Apparatus adapter according to one of claims 1 to 8, characterised in that the connecting terminals (64) for the leads (43) coming from the flat plug contacts (38) are accommodated in a contact block (54), which is connectable to the interconnected housing halves (30, 31) by means of locking connections.

10. Apparatus adapter according to claim 9, characterised in that the contact block (54) is provided with locking springs (56), which are guided on the internal surfaces facing one another of the long side walls of the housing halves (30, 31) and lock in position in apertures in these side walls by means of guide ribs (58).

11. Apparatus adapter according to claim 9 or 10, characterised in that the contact block (54) is closable by means of a contact block cover (60), which is retained on the contact block (54) by means of locking connections; and in that the contact block cover (60) has additional locking elements for securement on the lower mounting part (10).

## Revendications

1. Adaptateur d'appareils pour la connexion par enfichage à des barres omnibus (20) dans un système de barres omnibus, avec des contacts de connexion logés dans une boîtier de l'adaptateur allongée, boîtier de l'adaptateur qui porte des connecteurs à encliquetage pour la fixation à une partie inférieure de fixation (10) du système de barres omnibus et un barre en chapeau pour la mise en place d'un appareil,
caractérisé
en ce que le boîtier de l'adaptateur est en direction longitudinale et parallèlement à la direction d'enfichage subdivisé en deux demi-boîtiers (30, 31),
en ce que les demi-boîtiers (30, 31) portent des éléments de fixation (35, 36, 37, 42) répartis en direction longitudinale sur leurs côtés tournés l'un vers l'autre dans le plan de séparation, mais décalés transversalement e, gradins, pour la fixation à l'abri de la rotation de contacts d'enfichage plats en forme de U (38) permettant la connexion par enfichage,
en ce que les demi-boîtiers (30, 31) sont reliées l'une à l'autre et en ce que les contacts d'enfichage plats(38) sont par l'intermédiaire de conducteurs (43) reliés à des bornes de connexion (64) logées dans un bloc de contact (54) ou peuvent être connectés directement à l'appareil à mettre en place.

2. Adaptateur d'appareils suivant la revendication 1,
caractérisé
en ce que les demi-boîtiers (30, 31) constituent en substance les parois latérales de boîtier de l'adaptateur et sont dotés de parois de séparation (34) décalées en gradins en direction longitudinale, se complétant mutuellement et disposées perpendiculairement aux parois latérales, et
en ce que dans la région de joint des parois de séparation (34) sont formés des éléments de fixation (35, 36, 37) pour la réception à l'abri de la rotation des contacts d'enfichage plats (38).

3. Adaptateur d'appareils suivant la revendication 2,
caractérisé
en ce que les contacts d'enfichage plats (38) sont par une fente subdivisés en deux ailes de contact (39, 40) dont la distance est légèrement inférieure à l'épaisseur d'ailes de serrage de barres omnibus traditionnelles,
en ce que les fentes des contacts d'enfichage plats (38) se terminent par un tronçon terminal circulaire (41), au travers lequel sont guidés les éléments de fixation (35, 36, 37) ayant la forme de logements pour vis, et
en ce que les deux demi-boîtiers (30, 31) sont reliés l'un, à l'autre au moyen de ces logements pour vis.

4. Adaptateur d'appareils suivant l'une quelconque des revendications de 1 à 3,
caractérisé
en ce que le conducteur (43) est de préférence fixé par rivetage ou par soudage.

5. Adaptateur d'appareils suivant l'une quelconque des revendications de 1 à 4,
caractérisé
en ce que les demi-boîtiers (30, 31) sont munis d'éléments de paroi (32), qui constituent les petits côtés du boîtier de l'adaptateur dirigés transversalement à la direction longitudinale et qui sont dotés de nervures d'encliquetage (33).

6. Adaptateur d'appareils suivant l'une quelconque des revendications de 1 à 5,
caractérisé
en ce que dans la région supérieure de leurs parois latérales longues, les demi-boîtiers sont munis de lattes perforées (46) dont les trous sont équidistants.

7. Adaptateur d'appareils suivant l'une quelconque des revendications de 1 à 6,
caractérisé
en ce que le côté supérieur ouvert des demi-boîtiers (30, 31) reliés mutuellement peut être fermé par un couvercle (50) coulissant, et
en ce que ce couvercle (50) présente des séries de perforations (52) pour la fixation d'un tronçon d'une barre en chapeau.

8. Adaptateur d'appareils suivant l'une ou l'autre des revendications 6 et 7,
caractérisé
en ce que le couvercle (50) peut être introduit entre les lattes perforées (46) et une nervure de guidage (49) des demi-boîtiers (30, 31) reliés l'un à l'autre, en ce que qu'en regard des nervures de guidage (49), les lattes perforées (46) constituent une série de logements d'encliquetage (48) pour des ressorts d'encliquetage (51) fixés au couvercle (50), et
en ce que le couvercle (50) est retenu dans la position terminale d'introduction au moyen d'un ressort de fixation (59).

9. Adaptateur d'appareils suivant l'une quelconque des revendications de 1 à 8,
caractérisé
en ce que les bornes de connexion (64) pour les conducteurs (43) issus des contacts d'enfichage plats (38) sont logées dans un bloc de contact (54), qui peut être relié par l'intermédiaire de liaisons d'encliquetage aux demi-boîtiers (30, 31) reliés l'un à l'autre.

10. Adaptateur d'appareils suivant la revendication 9,
caractérisé
en ce que le bloc de contact (54) est doté de ressorts d'encliquetage (56) guidés sur les côtés intérieurs de faisant face des parois latérales longues des demi-boîtiers (30, 31) et qui s'encliquettent par des nervures d'encliquetage dans des évidements de ces parois latérales.

11. Adaptateur d'appareils suivant l'une ou l'autre des revendications 9 et 10,
caractérisé
en ce que le bloc de contact (54) peut être fermé au moyen d'un couvercle de bloc de contact (60); qui est maintenu au moyen de liaisons d'encliquetage sur le bloc de contact (54), et
en ce que le couvercle de bloc de contact (60) présente des éléments d'encliquetage supplémentaires pour sa fixation à l'élément de fixation inférieur (10).
